# EUROPÄISCHE PATENTSCHRIFT

(11) **EP 0 422 174 B1**
(45) Veröffentlichungstag und Bekanntmachung des Hinweises auf die Patenterteilung: **12.03.1997**
(21) Anmeldenummer: 90906168.1
(22) Anmeldetag: 17.04.1990
(51) Int. Cl.: D01C 1/00, C04B 18/24, D01B 1/42

(54) **VERSTÄRKUNGS- UND/ODER PROZESSFASERN AUF BASIS VON PFLANZENFASERN, VERFAHREN ZU IHRER HERSTELLUNG UND IHRE VERWENDUNG**
REINFORCING AND/OR PROCESS FIBRES BASED ON VEGETABLE FIBRES, PROCESS FOR PRODUCING THEM AND THEIR USE
FIBRES DE RENFORCEMENT ET/OU DE TRAITEMENT A BASE DE FIBRES VEGETALES; LEUR PROCEDE DE PRODUCTION ET LEUR UTILISATION

(30) Priorität: 17.04.1989 DE 3912615; 26.03.1990 DE 4009662
(43) Veröffentlichungstag der Anmeldung: 17.04.1991
(60) Teilanmeldung: 96108182.5
(73) Patentinhaber: ECCO GLEITTECHNIK GMBH, D-82152 Planegg (DE)
(72) Erfinder: SPEHNER, Jean Léon, F-67100 Strasbourg (FR)
(74) Vertreter: Kinzebach, Werner, Dr.
(86) Internationale Anmeldenummer: EP9000614
(87) Internationale Veröffentlichungsnummer: WO9012906

(56) Entgegenhaltungen:
- BE-A- 357 488
- BE-A- 360 878
- BE-A- 443 929
- CH-A- 461 340
- DE-A- 726 399
- DE-A- 3 049 997
- DE-A- 3 730 687
- DE-C- 825 872
- DE-C- 875 851
- FR-A- 1 529 863
- GB-A- 1 089 777
- US-A- 3 734 766

## Beschreibung

Die Erfindung betrifft Verstärkungs-und/oder Prozessfasern auf Basis von Pflanzenfasern, Verfahren zu ihrer Herstellung und ihre Verwendung.

Es ist bekannt, daß Formteilen häufig Asbestfasern beigemischt werden. In der letzten Zeit hat sich aber herausgestellt, daß Asbest vom gesundheitlichen Standpunkt keineswegs unbedenklich ist. Trotz dieses Nachteils kommen diese Fasern nach wie vor in großem Umfang zur Anvendung, weil sie auf vielen Anwendungsgebieten große Vorteile besitzen und echte Alternativen am Markt zur Zeit nicht vorhanden sind.

Das gleiche gilt für Glasfasern. Auch Kunstfasern sind nicht unbedenklich, da bei höheren Temperaturen Zersetzungsreaktionen unter Bildung von toxischen Dämpfen stattfinden können.

Auch auf der Basis von Pflanzenfasern wurde bereits versucht, ein Ersatzmaterial für Asbest zu finden. So beschreibt DE-OS 30 08 204 ein Verfahren zur Herstellung einer Armierungsfaser, bei dem Pflanzenfasern zunächst bezüglich der Kapillaren geöffnet werden und die so behandelten Plfanzenfasern dann mit einer Aufschlämmung von Kalk und Wasser und nach einer Zwischentrocknung mit einer Formaldehyd enthaltenden Wasserglaslösung imprägniert werden. Diese Behandlungsschritte können auch in umgekehrter Reihenfolge ausgeführt werden. Auch dieses Verfahren hat jedoch nicht zu dem gewünschten Erfolg geführt.

Die DE-C-875 851, die ein Zusatzpatent zur DE-C-825 872 darstellt, beschreibt ein Verfahren zum Naßaufschließen und Nachbehandeln von Bastfasern. Dabei werden Faserbündel in Elementarfasern aufgelöst, indem die Faserbündel einem Alkaliaufschluß unterzogen und gleichzeitig einer Schalleinwirkung ausgesetzt werden.

Die DE-A- 726 399 beschreibt ein Verfahren zur Gewinnung von verspinnbaren Fasern aus faserhaltigen pflanzenstengeln, wobei die Pflanzenstengel zunächst geröstet und anschließend einer Ultraschallbehandlung unterzogen werden.

Der vorliegenden Erfindung liegt die Aufgabe zugrunde, Verstärkungs- und Prozeßfasern zur Verfügung zu stellen, deren Gewinnung auf einfache und schonende Weise möglich ist.

Diese Aufgabe wird gelöst durch Verstärkungs- und Prozessfasern auf Basis von Pflanzenfasern, die durch das nachstehende Verfahren erhältlich sind.

Das Verfahren zur Herstellung der erfindungsgemäßen Verstärkungs- und Prozessfasern ist dadurch gekennzeichnet, daß man die faserhaltigen Teile von Faserpflanzen von Holzbestandteilen und anderen unerwünschten Bestandteilen der Pflanze befreit, indem man die faserhaltigen Pflanzenteile einer Ultraschallbehandlung in wäßrigem Medium unterwirft, wobei die Ultraschallbehandlung von gerösteten Faserpflanzen ausgeschlossen ist.

Für die Herstellung der erfindungsgemäßen Armierungs- und Prozessfasern sind Fasern von allen Faserpflanzen geeignet. Bevorzugt verwendet man Bastfasern, wie die Stengelfasern von Flachs, Hanf, Jute, Nesselpflanzen, die Blattfasern der Agaven, die Samenhaare beispielsweise der Baumwolle und die Fasern der Fruchtschale von Kokos. Brauchbar sind auch Fasern, die aus Gräsern erhältlich sind, insbesondere aus Elefantengras, das einen Faseranteil von ca. 50 % besitzt.

Die Pflanzenfasern in geschnittener oder ungeschnittener Form müssen zuerst von Holzbestandteilen und anderen unerwünschten Pflanzenbestandteilen befreit werden. Dies erfolgt durch Aufschluß der Pflanzenfasern mit einer Ultraschallbehandlung in wäßrigem Medium. Die Ultraschallwellenlänge ist nicht kritisch. Sie wird je nach Apparatur vorzugsweise so gewählt, daß optimale Schallintensität erreicht wird und Ultraschallkavitation eintritt.

Als wäßriges Medium verwendet man vorzugsweise ein Gemisch aus Wasser mit mindestens einem polaren organischen Lösungsmittel. Als organisches Lösungsmittel verwendet man vorzugsweise einen C₁ bis C₄-Mono- oder Dialkohol, ein C₁ bis C₄-Keton, einen mit Wasser mischbaren Äther oder ein Gemisch davon. Besonders bevorzugt sind Methanol, Ethanol und Aceton. Das Volumenverhältnis von Wasser zu organischem Lösungsmittel liegt vorzugsweise im Bereich von 5:1 bis 1:5, insbesondere 3:1 bis 1:3.

Das Ultraschallverfahren ist eine besonders rasche, einfache und schonende Methode zur Entfernung der Holzbestandteile und anderer unerwünschter Bestandteile der rohen Pflanzenfasern. Die auf diese Weise erhaltenen Pflanzenfasern sind mechanisch nicht beschädigt und sie besitzen die Zerreißfestigkeit der ursprünglichen Faser. Da auch die anderen unerwünschten Pflanzenbestandteile, insbesondere das Bindemittel, weitgehend durch die Ultraschallbehandlung entfernt werden, sind die Fasern mit anderen Materialien gut verträglich, so daß sie leicht in eine Matrix aufgenommen werden können. Die nach Ultraschallbehandlung erhaltenen Pflanzenfasern sind daher auch ohne eine weitere Nachbehandlung für die nachfolgend noch genannten Anwendungsgebiete geeignet.

Gewünschtenfalls können die von Holzbestandteilen befreiten Fasern anschließend mit der wäßrigen Lösung einer Metallverbindung behandelt werden. Diese Lösung enthält insbesondere 1 bis 30 Gew.-%, besonders bevorzugt 10 bis 30 Gew.-% der Metallverbindung, bezogen auf das Gesamtgewicht der Lösung. Vorzugsweise erfolgt die Behandlung bei 50 bis 100 °C.

Falls erforderlich, werden die Fasern dann mit Wasser gewaschen und gegebenenfalls getrocknet und mit dem Bindemittel behandelt oder sie werden mit einer Mineralsäure, insbesondere Salzsäure, Phosphorsäure oder Schwefelsäure, neutralisiert, gegebenenfalls getrocknet und mit dem Bindemittel behandelt.

Bevorzugte Metallverbindungen sind Alkali- oder Erdalkalioxide, -hydroxide, -carbonate, -thiosulfate oder -sulfate sowie basische Eisen-, Titan-, Antimon- oder Aluminiumsalze. Besonders bevorzugt sind Alkali- oder Erdalkalihydroxide, Alkalimetasilikate und Alkalithiosulfate, z.B. Natrium- oder Kaliumhydroxid, Natriumetasilikat und Natriumthiosulfat.

Als Bindemittel verwendet man insbesondere Zement, Gips, Silikate, Alkali- oder Erdalkalisalze von Mineralsäuren, Bitumen, Asphalt, natürliche und synthetische Elastomere, Polyurethane, Phenolharze, Resole, Melaminharze, Epoxyharze oder deren Gemische.

Die Anwendung dieser Bindemittel kann in wäßrigem oder organischem Medium (Lösungsmittel) erfolgen. Die Bindemittelmenge beträgt vorzugsweise 5 bis 20 Gew.-%, bezogen auf den Faseranteil.

Die Fasern werden mit einer wäßrigen oder organischen Lösung oder Suspension des Bindemittels imprägniert, indem sie beispielsweise in die Lösung oder Suspension getaucht oder damit besprüht werden. Die Imprägnierung erfolgt vorzugsweise bei Raumtemperatur, anschließend wird getrocknet.

Anstelle der in der oben beschriebenen Weise erhaltenen Fasern kann man auch die bei der Flachsbearbeitung anfallenden Faserkomponenten direkt mit dem Bindemittel behandeln.

Je nach Anwendungszweck der erfindungsgemäßen Fasern kann man noch zusätzliche Behandlungsstufen vorsehen. Wenn beispielsweise eine helle Faser gewünscht ist, kann man nach der Vorbehandlung der Fasern einen Bleichvorgang einschieben. Zu diesem Zweck werden die Fasern in üblicher Weise bei Raumptemperatur oder bei erhöhter Temperatur mit einer Peroxid- oder Hypochloritlösung oder mit Chlorwasser behandelt und anschließend mit Wasser gespült.

Falls ein tribologischer Effekt gewünscht ist, kann man ihnen ein Feststoffschmiermittel zusetzen. Geeignete Feststoffschmiermittel sind beispielsweise Molybdändisulfid, Graphit, Zinksulfit, Tricalciumphosphat, Titanoxid und dergleichen.

Falls eine zusätzliche flammhemmende Ausrüstung gewünscht ist, kann man ihnen eine flammhemmende Verbindung zusetzen, wie ein Antimonoxid, Eisensulfat, Alaun, Wismutoxid, Harnstoffphosphat oder Chlorparaffin.

Als Konservierungsmittel kann ihnen auch ein Bakterizid, wie ein Schwermetallsalz oder eine Chlorphenolverbindung, zugesetzt werden.

Die erfindungsgemäßen Fasern können auch hydophobiert werden, zum Beispiel mit einem Fluorcopolymer, Paraffin, Polysiloxan, reaktiven Hydrophobierungsmittel (Silane, Isocyanate) oder Zirkon- oder Zinksalz.

Im folgenden werden Anwendungsgebiete für die erfindungsgemäßen Fasern erläutert:

In der Zementfaserindustrie sind die erfindungsgemäßen "mineralisierten" Fasern für die Herstellung von beispielsweise Zementplatten und Zementformteilen brauchbar. Für diesen Zweck werden die Fasern wie oben beschrieben behandelt, auf eine Länge von beispielsweise 4 bis 8 mm zugeschnitten und mit einer Metallverbindung wie oben beschrieben behandelt. Die Einarbeitung der Fasern in den Zement erfolgt auf übliche Weise, beispielsweise durch Zumischen zum Zement oder zu der angemachten Betonmischung.

Auf gleiche Weise können Gipsplatten und Gipsformteile hergestellt werden. Die Anwendung mineralisierter Pflanzenfasern ist hier nicht zwingend, weil die Mineralisierung bei der Anwendung der Pflanzenfasern im Gipsbrei erfolgen kann. Die Länge der Fasern richtet sich nach der gewünschten mechanischen Festigkeit der Gipsteile.

Für die Herstellung von Gips für medizinische Zwecke werden die Fasern zusätzlich, wie oben beschrieben, gebleicht, was gleichzeitig eine Entkeimung bewirkt.

Für die Herstellung von Verputz- und Spachtelmassen auf Basis von Gips und Leim oder wasserlöslichen Harzen setzt man die vorbehandelten Fasern zusammen mit einem üblichen Konservierungsmittel ein. Auch in diesem Fall ist die gewünschte Festigkeit maßgebend für die Länge der zur Anwendung kommenden Fasern.

Die erfindungsgemäßen Fasern sind auch zur Herstellung von Schalldämmstoffen, wie Maschinenverkleidungen und Massen für den Unterbodenschutz von Fahrzeugen und zur Verwendung in Dichtmassen, Dachbahnen und Straßenbelägen geeignet. Zu diesem Zweck werden sie beispielsweise mit Bitumen-Gummimehl, Asphalt und Epoxyharzen vermischt. Die Länge der Fasern richtet sich nach der Auftragungsmethode. Bei aufzusprühenden Uberzügen sollte die Länge der Fasern 10 mm nicht überschreiten, wohingegen die Länge der Fasern bei aufgespachtelten Überzügen 20 bis 50 mm betragen kann.

Die erfindungsgemäßen Fasern sind besonders geeignet, als Zusatz zu Phenoplasten oder thermoplastischen Kunststoffen, insbesondere bei der Herstellung von Kunststoff-Formteilen.

Die erfindungsgemäßen Fasern können auch in Form von Garnen oder Geweben in Phenoplasten oder thermoplastischen Kunststoffen verwendet werden, welche zu Gleit- und Verschleißteilen und gepreßten Maschinenteilen, wie Bremsbändern, Kupplungen und Reibbelägen, verarbeitet werden. Sie verleihen den Formteilen ausgezeichnete mechanische Eigenschaften, wie Zug-, ReiB- und Biegefestigkeit.

In der Papier- und Pappeindustrie kommen gebleichte oder ungebleichte erfindungsgemäße Fasern zur Anwendung. Für diesen Zweck werden sie vorzugsweise mit einer Harzlösung (Leimung), die aus Harz, Seifen, Wasserglas und Casein besteht, imprägniert. In gleicher Weise lassen sich die erfindungsgemäßen Fasern auch bei der Herstellung von Filz verwenden.

Die erfindungsgemäßen Fasern können auch zur Herstellung von Poliermitteln verwendet werden. Zu diesem Zweck werden Fasern von ca. 2 bis 4 mm Länge mit Wachs oder einer Gummilösung getränkt und anschließend über einen Extruder zu Kügelchen geformt. Als Wachse kann man beispielsweise Bienenwachs, synthetische Hartwachse, Pflanzenwachse, wie Carnaubawachs, Candelilawachs und dergleichen verwenden. Je nach Wachsart liegt das Verhältnis von Wachs zu Faser im Bereich von 3 bis 5 g Wachs pro 1 g Faser. Durch geeignete Wahl des Wachses läßt sich auch die Härte und die thermische Stabilität der Kügelchen beeinflussen.

Als Gummilösung sind Natur- oder Synthesegummi, aufgelöst in einem Lösungsmittel, beispielsweise Methylenchlorid und Kohlenwasserstoffe, wie Xylol, Toluol sowie Latex brauchbar. Latex kann auch in wäßrigem Medium zur Anwendung kommen.

Die mit Wachs oder mit Gummi getränkten Faserkügelchen werden insbesondere als Trommelgut zum Reinigen und Polieren von verschiedenen Materialien (Leder, Holz, Metall) eingesetzt. Sie können auch als Strahlgut beim Strahlreinigen (z.B. Sandstrahlen) Anwendung finden. Die mit Gummi getränkten Faserkügelchen lassen sich vorteilhaft auch in Preßmassen einarbeiten. Sie stauben nicht und haben eine bessere Verankerung in der Matrix in Gegenwart von Harzen oder bei der Armierung von Elastomeren.

### BEISPIELE

### Referenz-Beispiel 1

Grünflachsfasern wurden durch Rösten und Entholzen von Holzbestandteilen befreit. 100 kg der von Holzbestandteilen befreiten Fasern wurden in einer 5 %igen wäßrigen Natriumhydroxidlösung 30 Minuten bei 60° C gerührt. Die Fasern werden isoliert und durch Besprühen mit 10 %iger Phosphorsäure neutralisiert. Anschließend werden die Fasern in einem Heißluftstrom, z.B. im Wirbelbett, getrocknet.

### Referenz-Beispiel 2

Man wiederholt das in Beispiel 1 beschriebene Verfahren, wobei man jedoch nach der Behandlung der Fasern mit Natronlauge die Fasern isoliert, mit Wasser wäscht und anschließend mit Zementbrühe besprüht.

### Beispiel 1

Rohflachsstengel, die nur oberflächlich entholzt waren, werden auf 10 cm Länge geschnitten und in ein Gemisch von 50 % Wasser und 50 % Ethanol (V/V) eingetaucht und bei Raumtemperatur mit Ultraschall behandelt. Der Ultraschallgenerator wurde auf 700 kHz bei einer Leistung von 50 Watt cm/² über eine piezoelektrische Anordnung eingestellt. Der Aufschluß war nach 10 Minuten beendet und die Bad-Temperatur erhöhte sich um 30 °C. Die Fasern wurden anschließend isoliert und in einem Heißluftstrom getrocknet.

## Patentansprüche

1. Verstärkungs- und/oder Prozeßfasern auf Basis von Pflanzenfasern, dadurch erhältlich, daß man die faserhaltigen Teile von Faserpflanzen von Holzbestandteilen und anderen unerwünschten Bestandteilen der Pflanze befreit, indem man die faserhaltigen Pflanzenteile einer Ultraschallbehandlung in wäßrigem Medium unterwirft, wobei die Ultraschallbehandlung von gerösteten Faserpflanzen ausgeschlossen ist.

2. Fasern nach Anspruch 1 auf Basis von Flachs-, Jute-, Nessel-, Hanf-, Baumwolle- oder Sisalfasern.

3. Fasern nach Anspruch 1 oder 2, wobei man die Ultraschallbehandlung in wäßrigem Methanol, Ethanol oder Aceton durchführt, wobei das Volumenverhältnis von Wasser zu diesen Lösungsmitteln im Bereich von 5:1 bis 1:5 liegt.

4. Fasern nach einem der Ansprüche 1 bis 3, dadurch erhältlich, daß man die Fasern zusätzlich behandelt mit entweder
a) einem anorganischen oder organischen Bindemittel im Falle von Flachsfasern;
b) einer wäßrigen Lösung mindestens einer Metallverbindung, die ausgewählt ist unter Metalloxiden, Metallhydroxiden, Metallcarbonaten, Metallsulfaten, Metallthiosulfaten, Metallsulfiten, Metallsilikaten oder Metallphosphaten, und, nach einer Wäsche mit Wasser, mit einem anorganischen oder organischen Bindemittel; oder
c) mit einer wäßrigen Lösung mindestens einer Metallverbindung, die ausgewählt ist unter Metalloxiden, Metallhydroxiden oder Metallcarbonaten und mit einer Mineralsäure bis zur Neutralisation der Metallverbindung.

5. Fasern nach Anspruch 4, dadurch gekennzeichnet, daß das Bindemittel ausgewählt ist unter Zement, Gips, einem Silikat, Bitumen, Asphalt, einem natürlichen oder synthetischen Elastomer, einem Polyurethan, Phenolharz, Resol, Melaminharz, Epoxyharz oder einem Gemisch davon.

6. Fasern nach Anspruch 4 oder 5, dadurch erhältlich, daß man 5 bis 20 Gew.-% Bindemittel, bezogen auf den Faseranteil, verwendet.

7. Fasern nach einem der Ansprüche 4 bis 6, dadurch gekennzeichnet, daß die Metallverbindung ausgewählt ist unter einem Alkali- oder Erdalkalimetalloxid, -hydroxid, -carbonat, -thiosulfat, oder -sulfat, basischen Eisen-, Titan-, Antimon- oder Aluminiumsalz, und einem Alkalimetallsilikat.

8. Fasern nach einem der Ansprüche 4 bis 7, dadurch gekennzeichnet, daß man die Pflanzenfasern mit einer 1 bis 30 Gew.-%igen wäßrigen Lösung der Metallverbindung behandelt.

9. Fasern nach einem der vorhergehenden Ansprüche, dadurch gekennzeichnet, daß sie zusätzlich mit einem Mittel zur Flammfestausrüstung, einem Feststoffschmiermittel, einem Hydrophobierungsmittel und/oder einem Konservierungsmittel ausgerüstet sind.

10. Fasern nach einem der vorhergehenden Ansprüche, dadurch erhältlich, daß man die Fasern nach der Ultraschallbehandlung einem Bleichvorgang unterzieht.

11. Formteile aus Pflanzenfasern nach einem der Ansprüche 1 bis 10.

12. Verfahren zur Herstellung der Fasern nach Anspruch 1, dadurch gekennzeichnet, daß man die faserhaltigen Teile von Faserpflanzen von Holzbestandteilen und anderen unerwünschten Bestandteilen der Pflanze befreit, indem man die faserhaltigen Pflanzenteile einer Ultraschallbehandlung in wäßrigem Medium unterwirft, wobei die Ultraschallbehandlung von gerösteten Faserpflanzen ausgeschlossen ist.

13. Verfahren nach Anspruch 12, dadurch gekennzeichnet, daß man die Ultraschallbehandlung in wäßrigem Methanol, Ethanol oder Aceton durchführt, wobei das Volumenverhältnis von Wasser zu diesen Lösungsmitteln im Bereich von 5:1 bis 1:5 liegt.

14. Verfahren nach Anspruch 12 oder 13, dadurch gekennzeichnet, daß man die erhaltenen Fasern zusätzlich behandelt mit entweder
a) einem anorganischen oder organischen Bindemittel im Falle von Flachsfasern;
b) einer wäßrigen Lösung mindestens einer Metallverbindung, die ausgewählt ist unter Metalloxiden, Metallhydroxiden, Metallcarbonaten, Metallsulfaten, Metallthiosulfaten, Metallsulfiten, Metallsilikaten oder Metallphosphaten, und, nach einer Wäsche mit Wasser, mit einem anorganischen oder organischen Bindemittel; oder
c) mit einer wäßrigen Lösung mindestens einer Metallverbindung, die ausgewählt ist unter Metalloxiden, Metallhydroxiden oder Metallcarbonaten und mit einer Mineralsäure bis zur Neutralisation der Metallverbindung.

15. Verfahren nach einem der Ansprüche 12 bis 14, dadurch gekennzeichnet, daß man die Fasern zusätzlich mit einem Mittel zur Flammfestausrüstung, einem Feststoffschmiermittel, einem Hydrophobierungsmittel und/oder einem Konservierungsmittel behandelt.

16. Verwendung der Fasern nach einem der Ansprüche 1 bis 10 für die Herstellung von Formteilen, insbesondere Zement-, Kunststoff- und Gipsformteilen, Schalldämmstoffen, Reibbelägen sowie in Dichtmassen, Dachbahnen, Straßenbelägen, Poliermitteln und als Füllstoff.

## Claims

1. Fibres for reinforcement and/or for use in processing, based on plant or vegetable fibres, which can be obtained by freeing the fibrous parts of fibrous plants from any woody constituents and other undesirable constituents of the plant, by subjecting the fibrous parts of the plant to ultrasound treatment in an aqueous medium, excluding the ultrasound treatment of roasted fibrous plants.

2. Fibres according to claim 1, based on flax, jute, nettle, hemp, cotton or sisal fibres.

3. Fibres according to claim 1 or 2, in which the ultrasound treatment is carried out in aqueous methanol, ethanol or acetone, the ratio by volume of water to these solvents being in the range from 5:1 to 1:5.

4. Fibres according to any one of claims 1 to 3, obtainable by additionally treating the fibres with either
a) an inorganic or organic binder, in the case of flax fibres;
b) an aqueous solution of at least one metal compound which is selected from metal oxides, metal hydroxides, metal carbonates, metal sulphates, metal thiosulphates, metal sulphites, metal silicates or metal phosphates, and, after washing with water, an inorganic or organic binder; or
c) an aqueous solution of at least one metal compound which is selected from the metal oxides, metal hydroxides or metal carbonates, and an inorganic acid until the metal compound is neutralised.

5. Fibres according to claim 4, characterised in that the binder is selected from cement, gypsum, a silicate, bitumen, asphalt, a natural or synthetic elastomer, a polyurethane, phenolic resin, resol, melamine resin, epoxy resin or a mixture thereof.

6. Fibres according to claim 4 or 5, obtainable by using 5 to 20 wt.% of binder, based on the fibre content.

7. Fibres according to any one of claims 4 to 6, characterised in that the metal compound is selected from an alkali or alkaline earth metal oxide, hydroxide, carbonate, thiosulphate or sulphate, a basic iron, titanium, antimony or aluminium salt, and an alkali metal silicate.

8. Fibres according to any one of claims 4 to 7, characterised in that the plant fibres are treated with a 1 to 30 wt.% aqueous solution of the metal compound.

9. Fibres according to any one of the preceding claims, characterised in that they are additionally provided with a flameproofing agent, a solid lubricant, a water-repellent agent and/or a preservative.

10. Fibres according to any one of the preceding claims, obtainable by subjecting the fibres to a bleaching process after the ultrasound treatment.

11. Moulded articles produced from plant fibres according to any one of claims 1 to 10.

12. Process for producing the fibres according to claim 1, characterised in that the fibrous parts of fibrous plants are freed from woody constituents and other undesirable constituents of the plant, by subjecting the fibrous parts of the plant to ultrasound treatment in an aqueous medium, excluding the ultrasound treatment of roasted fibrous plants.

13. Process according to claim 12, characterised in that the ultrasound treatment is carried out in aqueous methanol, ethanol or acetone, the ratio by volume of water to these solvents being in the range from 5:1 to 1:5.

14. Process according to claim 12 or 13, characterised in that the fibres obtained are additionally treated with either
a) an inorganic or organic binder, in the case of flax fibres;
b) an aqueous solution of at least one metal compound which is selected from the metal oxides, metal hydroxides, metal carbonates, metal sulphates, metal thiosulphates, metal sulphites, metal silicates or metal phosphates, and, after washing with water, an inorganic or organic binder; or
c) an aqueous solution of at least one metal compound which is selected from the metal oxides, metal hydroxides or metal carbonates, and an inorganic acid until the metal compound is neutralised.

15. Process according to any one of claims 12 to 14, characterised in that the fibres are additionally provided with a flameproofing agent, a solid lubricant, a water-repellent agent and/or a preservative.

16. Use of the fibres according to any one of claims 1 to 10 for producing mouldings, particularly cement, plastics and plaster mouldings, soundproofing materials and friction linings, and in sealing compounds, roofing materials, road surfaces, polishing agents and as fillers.

## Revendications

1. Fibres de renforcement et/ou de traitement à base de fibres végétales, qui peuvent être obtenues en débarrassant les parties contenant des fibres, de plantes à fibres, des composants ligneux et d'autres composants indésirés de la plante, procédé dans lequel les parties des plantes contenant des fibres sont soumises à un traitement par ultrasons dans un milieu aqueux, le traitement par ultrasons de plantes à fibres grillées étant exclu.

2. Fibres selon la revendication 1 à base de fibres de lin, de jute, d'ortie, de chanvre, de coton ou de sisal.

3. Fibres selon l'une des revendications 1 ou 2, pour lesquelles le traitement par ultrasons est effectué dans le méthanol, l'éthanol ou l'acétone aqueux, le rapport volumique de l'eau à ces solvants étant compris entre 5:1 et 1:5.

4. Fibres selon l'une des revendications 1 à 3, qui peuvent être obtenues en traitant de plus les fibres:
a) soit avec un liant organique ou minéral dans le cas de fibres de lin;
b) soit avec une solution aqueuse d'au moins un composé métallique, qui est choisi parmi les oxydes métalliques, les hydroxydes métalliques, les carbonates métalliques, les sulfates métalliques, les thiosulfates métalliques, les sulfites métalliques, les silicates ou les phosphates métalliques, et après un lavage à l'eau, avec un liant organique ou minéral;
c) soit avec une solution aqueuse d'au moins un composé métallique qui est choisi parmi les oxydes métalliques, les hydroxydes métalliques ou les carbonates métalliques et avec un acide minéral jusqu'à la neutralisation du composé métallique.

5. Fibres selon la revendication 4, caractérisées en ce que le liant est choisi parmi le ciment, le plâtre, un silicate, le bitume, l'asphalte, un élastomère naturel ou synthétique, un polyuréthanne, une résine phénolique, le résol, la résine mélamine, la résine époxy ou leur mélange.

6. Fibres selon l'une des revendications 4 ou 5, que l'on peut obtenir en utilisant 5 à 20 % en poids de liant, par rapport à la teneur en fibre.

7. Fibres selon l'une des revendications 4 à 6, caractérisées en ce que l'on choisit le composé métallique parmi un oxyde, un hydroxyde, un carbonate, un thiosulfate ou un sulfate alcalin ou alcalino-terreux, un sel basique de fer, de titane, d'antimoine ou d'aluminium, et un silicate alcalin.

8. Fibres selon l'une des revendications 4 à 7, caractérisées en ce que les fibres végétales sont traitées avec une solution aqueuse du composé métallique à raison de 1 à 30 % en poids.

9. Fibres selon l'une des revendications précédentes, caractérisées en ce qu'elles comprennent en plus un agent pour les rendre ignifuges, un lubrifiant solide, un agent d'imperméabilisation et/ou un agent de conservation.

10. Fibres selon l'une des revendications précédentes, susceptibles d'être obtenues en soumettant les fibres à un procédé de blanchiment après le traitement par ultrasons.

11. Eléments préformés à partir de fibres végétales selon l'une des revendications 1 à 10.

12. Procédé de production de fibres selon la revendication 1, caractérisé en ce que les parties contenant des fibres, de plantes à fibres, sont débarrassés des composants ligneux et d'autres composants indésirés de la plante, les parties des plantes contenant des fibres étant soumises à un traitement par ultrasons dans un milieu aqueux, le traitement par ultrasons de plantes à fibres grillées étant exclu.

13. Procédé selon la revendication 12, caractérisé en ce que l'on effectue le traitement par ultrasons dans le méthanol, l'éthanol ou l'acétone aqueux, le rapport volumique de l'eau à ces solvants étant compris entre 5:1 et 1:5.

14. Procédé selon l'une des revendications 12 ou 13, caractérisé en ce que les fibres sont traitées de plus:
a) soit avec un liant organique ou minéral dans le cas de fibres de lin;
b) soit avec une solution aqueuse d'au moins un composé métallique, qui est choisi parmi les oxydes métalliques, les hydroxydes métalliques, les carbonates métalliques, les sulfates métalliques, les thiosulfates métalliques, les sulfites métalliques, les silicates ou les phosphates métalliques, et après un lavage à l'eau, avec un liant organique ou minéral;
c) soit avec une solution aqueuse d'au moins un composé métallique qui est choisi parmi les oxydes métalliques, les hydroxydes métalliques ou les carbonates métalliques et avec un acide minéral jusqu'à la neutralisation du composé métallique.

15. Procédé selon l'une des revendications 12 à 14, caractérisé en ce que les fibres sont traitées de plus avec un agent pour les rendre ignifuges, un lubrifiant solide, un agent d'imperméabilisation et/ou un agent de conservation.

16. Utilisation des fibres selon l'une des revendications 1 à 10 pour la fabrication d'éléments préformés, en particulier, d'éléments préformés en ciment, en matière plastique et en plâtre, de matières acoustiquement absorbantes, de garnitures de friction, ainsi que dans les masses d'étanchéité, les toitures, les revêtements routiers, les agents de polissage et en tant que charge.
